# EUROPEAN PATENT APPLICATION

(11) **EP 4 230 481 A1**
(43) Date of publication of application: **23.08.2023**
(21) Application number: 23155424.7
(22) Date of filing: 07.02.2023
(51) Int. Cl.: B60R 16/023, H02J 1/08

(54) **VEHICLE POWER ARCHITECTURE, TRIGGER, AND METHOD OF INITIATING THE WAKE-UP OF FUNCTIONAL BLOCKS**

(30) Priority: 21.02.2022 GB 202202311
(71) Applicant: Aptiv Technologies Limited, St. Michael (BB)
(72) Inventor: STAUDT, Daniel, Dublin, 2 (IE); PUELLEN, Lukas, Dublin, 2 (IE); RICHTER-BROCKMANN, Tobias, Dublin, 2 (IE); HERZOGENRATH, Pekka, Ireland, 2 (IE)
(74) Representative: Lewis Silkin LLP

(57) **Abstract**

Vehicle power architecture including a plurality of functional blocks (4-7) for implementing functions and a power supply input (9) for receiving a power supply. An electric control unit, ECU 2, comprising a plurality of power control switches (12a-d), each being switchable between an open state where at least one respective functional block (4-7) is disconnected from the power supply input (9) and a closed state where the at least one respective functional block (4-7) is connected to the power supply input (9). A trigger (13) having a wake-up input (133) and for triggering the switching of one or more of the power control switches (4-7) to a closed state in response to external wake-up signals received at the wake-up input (133).

## Description

### Field

The present disclosure relates to an vehicle power architecture, and a trigger for use in an vehicle power architecture. The present disclosure also concerns a method of initiating the wake-up of functional blocks in a vehicle power architecture.

### Background

In recent years, electric control units (ECUs) have become more and more important in vehicle applications, and particularly in architectures supporting autonomous driving (AD) and advanced driver-assistance systems (ADAS). ECUs are tasked with implementing various functions, including control functions, processing operations and peripheral component interfaces.

An ECU typically includes a controller block for controlling a plurality of functional blocks, which are devices such as processors, sensors, actuators and circuits for performing functions. Within the ECU, there are often a plurality of internal blocks such as safety processors and performance processors for performing safety and performance functions. The ECU may also support a number of external blocks, such as sensors and actuators, which sit outside the ECU within the power architecture.

In zonal architectures, the ECU may function as a zone controller, serving as a hub for the power distribution and data connection requirements for functional blocks within the associated physical section of the vehicle. Typically, in such arrangements, a central vehicle controller (CVC) will relay commands to the zonal ECU via a common vehicle communication layer, such as a control area network (CAN) bus or ethernet. The controller block may then process the command and switch on the relevant blocks by sending a wake signal to the block or blocks in question.

In this connection, with such arrangements, the controller blocks are often switched on by the clamp 15 (KL 15 - DIN 72552) power supply rail, which is activated when the ignition of the vehicle is first triggered. As such, the controller block and other devices connected to this power supply rail are powered up once the driver is seated and ready to go. However, several functions need to be available before this, including functions that are independent of any driver interaction. For this, the devices associated with such functionality are connected to the clamp 30 (KL 30) power supply rail, which provides a constant live, direct current power supply in the form of an 'always on' battery positive (e.g. 12 VDC). Such 'KL 30' functional blocks may include devices such as sensors, actuators, and controller blocks that are associated with those functional blocks. For instance, devices involved with software updates over-the-air (OTA), alarm, and keyless entry functions will need to be fed by the KL 30 rail.

A consequence of the above is that the design of 'KL 30' devices, which form blocks that are connected to a direct current power supply, is complicated by the requirement for them to have a very low idle current. That is, because these devices are directly connected to the vehicle's battery when the vehicle isn't running, they act to drain the battery over time. As such, it is necessary to minimise the current draw when idle to mitigate the risk of a flat battery between vehicle uses. However, as vehicles continue to incorporate more functionality, the number of devices connected to the KL 30 rail has also increased, leading to increased battery discharge.

To attempt to address the above problems, some solutions have been proposed which utilise power stages with lower idle currents. However, this requires the usage of costly integrated circuits (ICs), which not only adds costs, but also significantly increases the general complexity by necessitating a power management sub-block having both wakeup and shut-off capabilities. Furthermore, such solutions only partly mitigate the issues because the initial power stages must still be powered by the power supply when idle.

Accordingly, there remains a need to address the above shortcomings in conventional power architectures.

### Summary

According to a first aspect, there is provided a vehicle power architecture, including: a plurality of functional blocks for implementing functions; a power supply input for receiving a direct current power supply; and an electric control unit, ECU, including: a plurality of power control switches, each configured to control the operation of at least one functional block, wherein each of the power control switches is switchable between an open state where the at least one respective functional block is disconnected from the power supply input and a closed state where the at least one respective functional block is connected to the power supply input; and a trigger configured to trigger the switching of one or more of the power control switches between the open and closed state in response to external wake-up signals received at a wake-up input of the trigger.

In this way, the functional blocks are not directly connected to the direct current power supply, such as the KL 30 or battery positive line, but instead connect through the array of power control switches. As such, the power control switches form a power control module within the electric control unit, allowing individual switches to be switched to selectively apply power to one or more of the function blocks supplied by the current path associated with that switch. As such, power may be applied to functional blocks, including devices, processors, sensors, actuators, and diagnostic modules, immediately prior to a wake-up operation being initiated. Conversely, when functional blocks are not in use, they may be selectively disconnected from the power supply to avoid idle current drain. Therefore, an ECU may be provided which has much lower idle current drain, without significantly increasing its complexity by necessitating complex power stages or associated integrated circuits for managing the same. Furthermore, external wake-up signals are able to trigger the activation of functional blocks independently, without waiting for a controller block within the ECU to boot. As such, faster reaction times may also be achieved.

In embodiments, the ECU further includes a controller block for controlling the operation of the plurality of functional blocks to perform predetermined functions, and the plurality of power control switches are each switchable under the control of the controller block. As such, the arrangement allows power delivery to functional blocks to be controlled by the controller block, in addition to inputs received through the trigger. Consequently, the trigger does not need to be used for all functions, but instead can be employed for specific functionality and special use-cases where rapid wake-up is required.

In embodiments, the controller block further comprises a controller block wake-up input for receiving the external wake-up signals. For this, a link line may be provided to the controller block wake-up input from a trigger communication line which connects to the trigger's wake-up input. In this way, the controller block can be rapidly woken simultaneously with the switching of one or more of the power control switches by the trigger.

In embodiments, the plurality of switches are smart fuses. In this way, control over the delivery of power may be implemented using electronic fuse devices (eFuses), which may provide both switching and diagnostic capabilities, in combination with a low idle current draw. Furthermore, the use of smart fuses also removes the need to provide fuse arrangements, such as melting fuses, elsewhere for the associated internal and external blocks. It will be understood that smart fuses may also include high speed digital (HSD) switches, as well as other intelligent self-monitoring power switches.

In embodiments, the trigger includes an instruction distributor connected to the wake-up input for determining which of the plurality of power control switches to switch based on a characteristic of the received external wake-up signal.In this way, the wake-up input may serve as a common input line for multiple wake-up source devices and then wake-up instructions are distributed to the appropriate power control switches. In embodiments the instruction distributor may be a demultiplexer.

In embodiments, the instruction distributor determines which of the plurality of power control switches to switch based on, at least in part, the voltage of the received external wake-up signal or a digital command. In this way, a simple communication protocol may be used to effect switching instructions.

In embodiments, the trigger includes a connector, terminal, PCB wire block, or level shifter for forwarding the wake-up signal to one or more of the power control switches. In other embodiments, the trigger includes a multiplexer that is controlled by the voltage level of the wake-up signal for switching one or more of the power control switches accordingly. In other embodiments, the trigger includes an encoder for translating a digital bus wake-up signal for switching one or more of the power control switches accordingly.

In embodiments, the architecture is a zonal architecture and the ECU is a zone controller. In this way, functional blocks within the physical section of the vehicle associated with the respective zone may be rapidly woken up.

In embodiments, the vehicle power architecture further includes a trigger communication line connected to the wake-up input for communicating the external wake-up signal thereto.

In embodiments, the vehicle power architecture further includes at least one remote microprocessor unit connected to the trigger communication line, wherein the at least one remote microprocessor unit is configured for generating external wake-up signals on the trigger communication line. In this way, a microprocessor unit located elsewhere in the vehicle is able to activate a functional block or blocks through the trigger communication line. For example, in zonal architectures, a microprocessor unit in a different zone, or in central controller, can trigger activation of functional blocks in a particular zone, without needing to wait for the local zone controller in that zone to boot.

In embodiments, the vehicle power architecture further comprises a timing signal generator for generating a timing signal on the trigger communication line, wherein the timing signal is for use in the ECU for time synchronization. In this way, the trigger communication line can be used for the additional purpose of time synchronization, thereby providing infrastructure cost savings.

According to a second aspect, there is provided a zonal vehicle power architecture, including: a power supply line; a trigger communication line for communicating wake-up signals; and a plurality of zones, each zone including: a plurality of functional blocks for implementing functions, an electric control unit, ECU, including a plurality of power control switches, each being switchable between an open state where at least one respective functional block is disconnected from the power supply line and a closed state where the at least one respective functional block is connected to the power supply line, and a trigger connected to the trigger communication line and for triggering the switching of one or more of the power control switches to a closed state in response to wake-up signals received on the trigger communication line.

In this way, the above arrangement provides for a more rapid response because optimization of communications within each zone and between zones is no longer dictated by a staged wake-up procedure. That is, functional blocks in different zones can be powered up simultaneously with minimal delay. As such, important sensors, actuators and control units for specific tasks can be woken up very fast across one or more zones, without necessitating the wake-up of the associated zone controllers first.

According to a third aspect, there is provided a trigger for an electric control unit, ECU, in an vehicle power architecture having a plurality of functional blocks for implementing functions and a power supply input, the trigger including: a wake-up input for receiving external wake-up signals; and an output for triggering, in response to external wake-up signals received at the wake-up input, the switching of one or more power control switches between an open state where at least one respective functional block is disconnected from the power supply input to a closed state where the at least one respective functional block is connected to the power supply input.

In embodiments, the trigger further includes an instruction distributor connected to the wake-up input for determining which of the plurality of power control switches to switch based on characteristics of the received external wake-up signals.

In embodiments, the demultiplexer determines which of the plurality of power control switches to switch based on, at least in part, the voltage of the received external wake-up signal or a digital command.

According to a fourth aspect, there is provided a method of initiating the wake-up of functional blocks in an vehicle power architecture having a plurality of functional blocks for implementing functions and a power supply input, the method including the steps of: generating a wake-up signal on a trigger communication line by a first microprocessor unit; receiving the wake-up signal on the trigger communication line at a trigger in an electric control unit, ECU, where the ECU includes a plurality of power control switches, each being switchable between an open state where at least one respective functional block is disconnected from the power supply input and a closed state where the at least one respective functional block is connected to the power supply input; and triggering, by the trigger, the switching of one or more power control switches from the open state to the closed state in response to the wake-up signal.

In embodiments, the vehicle power architecture is a zonal architecture, and the first microprocessor unit is associated with a first zone or a central vehicle controller; and the ECU is associated with a second zone.

In embodiments, the method further includes the step of: receiving the wake-up signal on the trigger communication line at a second trigger in a second ECU associated with a third zone, and triggering, by the second trigger, the switching of one or more power control switches in the second ECU from the open state to the closed state in response to the wake-up signal.

### Brief Description of Drawings

Illustrative embodiments will now be described with reference to the accompanying drawings in which:
Figure 1 shows a schematic illustration of a conventional power architecture;
Figure 2 shows a schematic illustration of a power architecture according to a related inventive arrangement;
Figure 3 shows a schematic illustration of a power architecture according to a first embodiment; and
Figure 4 shows a schematic illustration of a power architecture according to a second embodiment when incorporated into a vehicle.

### Detailed Description

The present disclosure is particularly relevant for vehicle applications and most particularly to multi domain controllers (MDCs) for use in both domain and zonal architectures. The present disclosure is also particularly relevant to the wake-up phase of functional blocks, as well as an optimized power distribution within such a system.

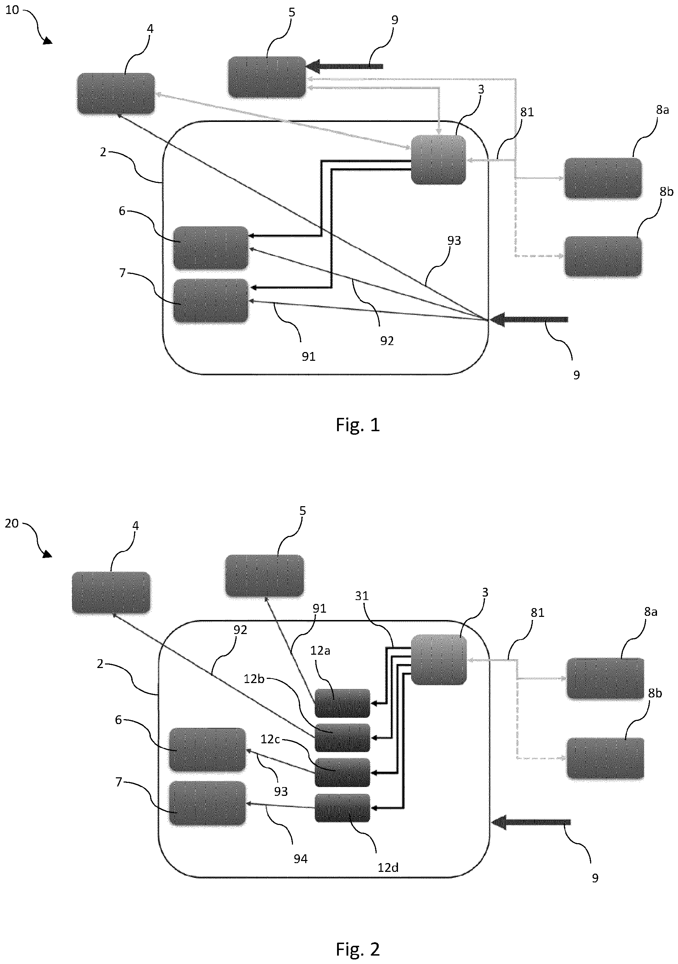

As background, figure 1 shows an illustrative vehicle power architecture 10 including an electric control unit (ECU) 2. The ECU 2 includes a plurality of internal blocks 6,7, such as safety and performance processors. The ECU 2 is also associated with a plurality of external blocks 4,5, such as sensors and actuators. The ECU 2 further includes a controller block (controller block) 3 to control operations at the different blocks 4-7. Where these blocks require a direct current power supply, they must be connected to the power supply input 9, such as the KL30 rail, via a plurality of power lines 91,92,93. This allows them to remain live in order to wake-up when instructed by the controller block 3. In use, the controller block 3 may receive an external interrupt from a wake-up source device 8a-b over a common vehicle communication layer 81, such as a control area network (CAN) bus or ethernet. For instance, in a zonal architecture, a central vehicle controller (CVC) may act as a wake-up source device by issuing a wake-up command, which the controller block 3 then processes and transmits a wake-up signal to the block or blocks in question. Communications between block or blocks and the controller block 3 can then be established. Equally, some blocks 5 may be directly connected to the common vehicle communication layer 81, so that wake-up is initiated as soon as a wake-up command is issued.

To mitigate the above described issues associated with idle current drain, the present inventors have developed the architecture shown in Figure 2 which utilises an array of smart fuses 12a-d to selectively turn functional blocks 4-7 on and off as needed. Specifically, the smart fuses 12a-d are each connected between the power supply input 9 and the power lines 91-94 that feed the blocks 4-7. As such, the blocks 4-7 are not directly connected to the power supply, but instead are connected via an associated switchable smart fuse 12a-d, with the smart fuses functioning together as a power control module within the ECU 2.

In use, the controller block 3 may instruct specific smart fuses 12a-d to switch for connecting their associated block or blocks 4-7 to the power supply input 9 to selectively power them up as needed. It will be understood that in other embodiments, more than one block 4-7 may be connected to a particular smart fuse 12a-d. Accordingly, the number of devices permanently connected to the power supply input 9, namely the KL 30 rail, is therefore reduced. This is because only the devices hosting the smart fuses 12a-d need to be supplied continuously, with these in turn controlling the subsequent activation of the functional blocks 4-7. This smart fuse arrangement therefore allows selective wake-up strategies to be implemented because each device can be powered individually. This is particularly helpful for implementing functions such as keyless entry and OTA, which would normally include several always-on devices. Such arrangements are also applicable in zonal architectures where smart fuses in zonal ECUs may be used to switch on and off functional blocks within the respective zone.

With the above, each smart fuse 12a-d functions as a single KL 30 device, which is constantly supplied with a current, but which provides for a very low idle power consumption. At the same time, the controller block 3 is used to control switching, allowing for flexibility in terms of the wake-up of blocks and the networking between devices. Accordingly, by having one controller block 3 that can, on demand, wake-up several functional blocks, including other ECUs, a more efficient architecture may be provided. Furthermore, it also allows future development efforts for further power consumption reductions to be focussed on the smart fuses and associated wake-up trigger devices.

The above said, in order to keep idle power consumption low, the controller block 3 controlling the switching needs to be kept powered off most of the time. As with the arrangement shown in Figure 1, an external interrupt from one of the wake up devices 8a-b is often used to wake-up the controller block 3 first. As shown in Figure 2, the controller block 3 then controls the switching of the smart fuses 12a-d to activate functional blocks. This however adds additional delays to the wakeup chain because the controller block 3 first needs to boot some basic software, process the input to determine where the trigger is coming from, and then initialize the communication networks before deciding which fuses 12a-d to switch on. This is especially problematic for functions which require very rapid response times, such as keyless entry systems. To improve reaction time, the controller block 3 could be connected to the power input 9 as a KL 30 device. However, this would increase idle current and complicate the controller block design by necessitating the introduction of additional power management stage sub-blocks, such as power management integrated circuits (PMICs).

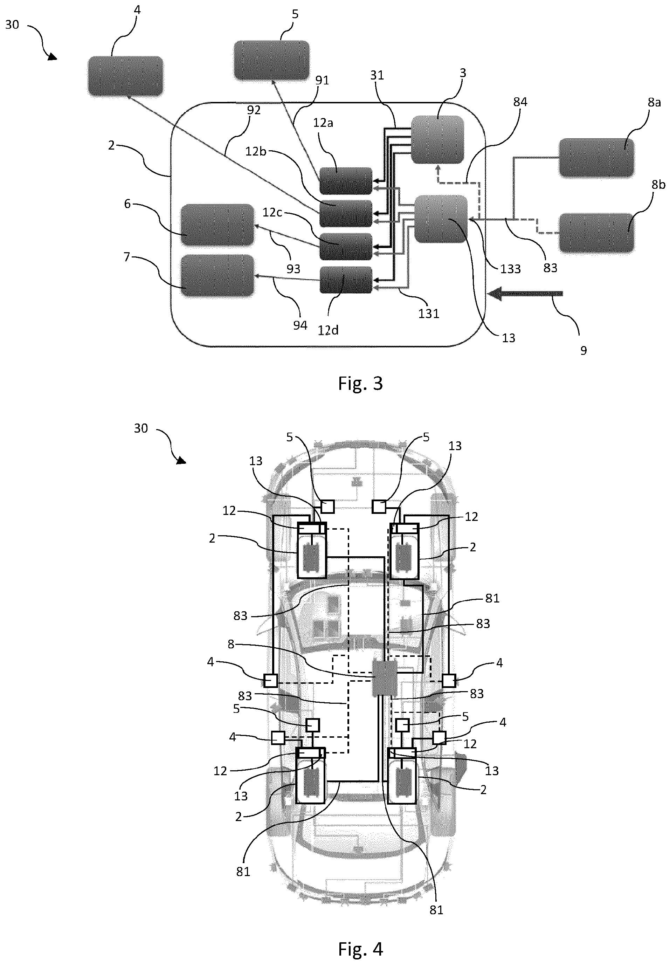

Figure 3 shows a schematic illustration of a power architecture 30 according to a first embodiment. As shown, this arrangement is similar to the related arrangement shown in Figure 2, with corresponding numerals being used for corresponding features, but with the addition of a trigger module 13 provided as a part of the electric control unit (ECU) 2.

As with the arrangements shown in Figures 1 and 2, the architecture 30 includes external blocks 4,5 which are external to the ECU 2 and internal blocks 6,7 which are internal to the ECU 2. The blocks 4,5, 6, 7 are used to perform various functions in the vehicle. In addition, the ECU 2 further includes a plurality of smart fuses 12a-d which form a power control module that connects between the power supply input 9 (KL 30 rail) and the blocks 4,5,6,7. The ECU 2 controls the switching of the smart fuses 12a-d through the power control wires 31. The ECU 2 is also connected to external devices, such as a central vehicle controller, via an vehicle communication layer, which is not shown in this illustration.

The trigger module 13 is connected to each of the smart fuses 12 a-d via an associated independent trigger wire 131, through which switching of the smart fuses 12 a-d may be controlled. In this respect, each smart fuse 12 includes an internal control circuit which provides switching control in response to switching signals received on either the trigger wire 131 or the power control wires 31. Each smart fuse further includes a sensor module for sensing the current conducted through the associated current path, thereby allowing diagnostic and performance evaluation data to be transmitted from each smart fuse, back to the controller block 3.

The trigger module 13 includes a wake-up input 133 which is connected to an external trigger network 83 for receiving wake-up trigger signals from one or more external wake-up sources 8a-b, such as a central vehicle controller, sensor devices, or other electronic control units (ECUs). The trigger signals generated by these wake-up sources 8a-b may be, for instance, a pulse signal. In this embodiment, the wake-up signal is encoded using a specific voltage level in order to address a specific smart fuse 12a-b. Within the trigger module 13, the wake-up signal is processed by a instruction distributor, and a switching signal is generated on one or more of the trigger wires 131 based on the voltage level for commanding the associated smart fuse 12a-d or fuses to switch. In this embodiment, a passive filter within the trigger module 13 is used to determine which trigger wires 131 the switching signal should be applied. As such, in response to a remotely generated wake-up signal, one or more smart fuses 12a-d may be selectively activated for connecting their associated functional blocks 4-7 to the power supply input 9. In other embodiments, different wake-up signal encoding and processing methodologies may be used. For example, in embodiments, the instruction distributor may be a demultiplexer and the wake-up trigger signals on the trigger network 83 may be communicated in multiplexed channels. For example, the trigger module 13 may include an active demultiplexer circuit for demultiplexing the signal channels and applying switching signals to the appropriate trigger wires 131. Irrespective of whether the trigger module 13 employs active or passive components, it allows switching signals to be directed using a very low power circuit, thereby allowing a smart fuse to be turned on or off from outside the ECU 2.

In use, the trigger module 13 allows bypassing of the vehicle communication layer and controller block 3, which would otherwise control the switching of the smart fuses 12. Accordingly, an external wake-up source 8a-b may directly trigger control of a smart fuse 12a-d order to rapidly power-up one or more functional blocks 4-7. This may allow functional blocks 4-7 to be activated before or concurrently with the activation of the controller block 2. The powered up functional blocks 4-7 may include, for instance, other electronic control units, sensors, or actuators. Importantly, the trigger module 13 control option provides for control in addition to the control provided by the controller block 3. Accordingly, once the controller block 3 is booted and ready, it can take over control of a particular smart fuse 12a-d again.

With the above arrangement, external wake-up sources 8a-b, which may include other electronic control units or sensors, are therefore able to trigger the selective activation of functional blocks associated with a different ECU 2. This thereby allows for rapid response times by facilitating the early wake-up of devices.

In parallel to the above, the trigger network 83 may also include a link wire 84 connected to the power management integrated circuit part of the controller block 3. This link wire 84 can be used to trigger the waking up of the controller block 3 in parallel to the activation of one or more of the functional blocks 4-7 via the trigger module 13. That is, a wake-up signal applied on the trigger network 83 may cause both the generation of a switching signal from the trigger module 13 and the immediate power up of the controller block 3. This allows the controller block 3 to begin booting immediately, thereby ensuring it is up and running as fast as possible. It will be understood that the link wire 84 may also connect to other devices, such as switches, for activating them at the same time as one or more of the smart fuses 12a-d.

With the above, because the external wake-up signal is able to trigger the activation of functional blocks independently, without waiting for the controller block 3 to boot, multiple milliseconds in reaction time may be saved. This time saving is significant in the context of vehicle manufacturer requirements for functions such as keyless entry. Furthermore, as the trigger module 13 allows smart fuse control in addition to the control provided by the controller block 3, it need not be used for all functions, but instead can be employed for specific functionality and special use-cases where rapid wake-up is required.

A further advantage with the above arrangement is that communication interfaces like CAN, LIN or Ethernet do not need to be used for wake-up. As such, cheaper drivers can be chosen for the trigger network 83, thereby facilitating connection between electronic control units in different parts of the vehicle, as needed by functionality requirements, and without influence by what ECUs need to be woken up in the chain. As discussed in further detail below, this can be especially important in zonal architectures where the communication interfaces are no longer domain oriented but zonal.

In this connection, figure 4 shows a schematic illustration of a power architecture according to a second embodiment, when incorporated into a vehicle. In this embodiment, a zonal architecture is provided. In this zonal architecture, four MCDs 2 are provided as zone controllers for supporting the power distribution and data connection requirements for functional blocks within their respective associated physical quadrant of the vehicle. A central vehicle controller 8 communicates with the MCDs 2 via the common vehicle communication layer 81. Within each MCD 2, is provided a trigger module 13 and a power control module 12. As discussed above, the power control module 12 includes a plurality of smart fuses for controlling the connection of functional blocks 4,5 within the respective zone to the power supply input.

In this example, an implementation of a keyless entry system will be described for illustration, although it will be understood that the arrangement is equally applicable to other functions and associated blocks. In this case, vehicle's door handles include handle sensor blocks 4 that are used to trigger communication with the vehicle's key fob via entry antenna blocks 5. Each the zonal ECU 2 therefore has a handle sensor block 4 and an entry antenna block 5 associated with it as external functional blocks. In this embodiment, the handle sensor blocks 4 are active capacitive sensors. However, it will be understood that other embodiments may employ passive sensors connected to an associated electronic control unit. The handle sensor blocks 4 remain active by connection to the power supply (Kl. 30).

When a user grabs one of the vehicle's handles, the respective handle sensor block 4 generates a first wake-up signal on the trigger network 83. In turn, the trigger network 83 connects to the power control modules 12 within the zonal MCDs 2 which, in response to the detection of the first wake-up signal, then switch their respective smart fuses associated with their respective antenna blocks 5. This powers up all the antenna blocks 5 simultaneously. The controller blocks within each zonal ECU 2 may also be simultaneously booted-up to control the antenna blocks 5 to verify the presence of a valid key fob. As such, the keyless entry request may be processed rapidly.

Accordingly, the above arrangement therefore provides for a more rapid response because optimization of communications within each zone and between zones is no longer dictated by a staged wake-up procedure. That is, as all corresponding functional blocks can be powered up simultaneously with minimal delay, important sensors, actuators and control units for specific task can be woken up very fast, with a minimum delay and without necessitating the wake-up of associated microcontrollers first. Nevertheless, the arrangement also provides the flexibility to allow the early wake-up process to be used in combination with subsequent communications with the microcontroller using the common vehicle communication layer 81.

It will be understood that the embodiments illustrated above show applications only for the purposes of illustration. In practice, embodiments may be applied to many different configurations, the detailed embodiments being straightforward for those skilled in the art to implement.

For example, it will be understood that the pattern or voltage level used for the external wake-up signals may be configured to be specific to functional blocks associated with specific functions across all zones. As such, the application of the specific pattern or voltage originating from one zone would lead to a power-up of sensors, actuators and ECUs for the same function in all zones. At the same time, different functions can be delivered using different specific patterns or voltages.

It will also be understood that although the example shown in Figure 3 used a single trigger network which is connected to all the zone ECUs, in other embodiments, each zone may have its own trigger network or line for initiating local wake up first. Once the wake-up process has been triggered in one zone, this may then be cascaded through the whole vehicle by the first zone generating an external wake-up signal which is detected by other power control modules 12 in other zones within the vehicle. For example, it could be transmitted to all zone ECUs to achieve a fast wake-up over the whole vehicle.

Furthermore, although implementations use additional wiring for the trigger network or line, it will be understood that the provision of this additional wiring allows it to be used for other tasks. For example, the trigger network may be connected to a controller block for use in early time synchronization by applying a simple pulse signal on the line. In such arrangements, for instance, once the trigger network has been used to trigger a power-up of one or more of the functional blocks and an associated controller block, and once the controller block has finished basic initialization, the timing pulse may be used to establish time synchronisation. The timing pulse may be, for example, a Pulse Per Second (PPS) signal. The provision of such a timing signal can be advantageous because the communication layers, such as ethernet in zonal architectures, can take time to initialise after start-up. As such, devices may synchronise before the communication network is fully available.

Finally, although in the above example, the trigger has been provided as a trigger module with the ECU, it will be understood that other trigger arrangements are possible. For example, the trigger may be provided as a connector input associated with an individual power control switch for directly controlling its switching. For instance, the tigger may be provided as a connector for a digital input.

## Claims

1. A vehicle power architecture, comprising:
a plurality of functional blocks for implementing functions;
a power supply input for receiving a direct current power supply; and
an electric control unit, ECU, comprising:
a plurality of power control switches each configured to control the operation of at least one functional block, wherein each of the power control switches is switchable between an open state where the at least one respective functional block is disconnected from the power supply input and a closed state where the at least one respective functional block is connected to the power supply input; and
a trigger configured to trigger the switching of one or more of the power control switches between the open and closed state in response to external wake-up signals received at awake-up input of the trigger.

2. A vehicle power architecture according to claim 1, wherein the ECU further comprises a controller block for controlling the operation of the plurality of functional blocks to perform predetermined functions, and
wherein the plurality of power control switches are each switchable under the control of the controller block.

3. A vehicle power architecture according to claim 2, wherein the controller block further comprises a controller block wake-up input for receiving the external wake-up signals.

4. A vehicle power architecture according to any preceding claim, wherein the plurality of switches are smart fuses.

5. A vehicle power architecture according to any preceding claim, wherein the trigger comprises an instruction distributor connected to the wake-up input for determining which of the plurality of power control switches to switch based on a characteristic of the received external wake-up signal.

6. A vehicle power architecture according to any preceding claim, wherein the architecture is a zonal architecture and the ECU is a zone controller.

7. A vehicle power architecture according to any preceding claim, further comprising a trigger communication line connected to the wake-up input for communicating the external wake-up signal thereto.

8. A vehicle power architecture according to claim 7, further comprising at least one remote microprocessor unit connected to the trigger communication line, wherein the at least one remote microprocessor unit is configured for generating external wake-up signals on the trigger communication line.

9. A vehicle power architecture according to claim 7 or 8, further comprising a timing signal generator for generating a timing signal on the trigger communication line, wherein the timing signal is for use in the ECU for time synchronization.

10. A zonal vehicle power architecture, comprising:
a direct current power supply line;
a trigger communication line for communicating wake-up signals; and
a plurality of zones, each zone comprising:
a plurality of functional blocks for implementing functions,
an electric control unit, ECU, comprising a plurality of power control switches, each being switchable between an open state where at least one respective functional block is disconnected from the direct current power supply line and a closed state where the at least one respective functional block is connected to the direct current power supply line, and
a trigger connected to the trigger communication line and for triggering the switching of one or more of the power control switches to a closed state in response to wake-up signals received on the trigger communication line.

11. A trigger for an electric control unit, ECU, in a vehicle power architecture having a plurality of functional blocks for implementing functions and a power supply input, the trigger comprising:
a wake-up input for receiving external wake-up signals; and
an output for triggering, in response to external wake-up signals received at the wake-up input, the switching of one or more power control switches between an open state where at least one respective functional block is disconnected from the power supply input to a closed state where the at least one respective functional block is connected to the power supply input.

12. A trigger according to claim 11, further comprising an instruction distributor connected to the wake-up input for determining which of the plurality of power control switches to switch based on characteristics of the received external wake-up signals.

13. A method of initiating the wake-up of functional blocks in an vehicle power architecture having a plurality of functional blocks for implementing functions and a power supply input, the method comprising the steps of:
generating a wake-up signal on a trigger communication line by a first microprocessor unit;
receiving the wake-up signal on the trigger communication line at a trigger in an electric control unit, ECU, where the ECU comprises a plurality of power control switches, each being switchable between an open state where at least one respective functional block is disconnected from the power supply input and a closed state where the at least one respective functional block is connected to the power supply input; and
triggering, by the trigger, the switching of one or more power control switches from the open state to the closed state in response to the wake-up signal.

14. A method according to claim 13, wherein the vehicle power architecture is a zonal architecture, and
the first microprocessor unit is associated with a first zone or a central vehicle controller; and
the ECU is associated with a second zone.

15. A method according to claim 14, further comprising the step of:
receiving the wake-up signal on the trigger communication line at a second trigger in a second ECU associated with a third zone, and triggering, by the second trigger, the switching of one or more power control switches in the second ECU from the open state to the closed state in response to the wake-up signal.
